# EUROPEAN PATENT APPLICATION

(11) **EP 2 829 202 A1**
(43) Date of publication of application: **28.01.2015**
(21) Application number: 13177666.8
(22) Date of filing: 23.07.2013
(51) Int. Cl.: A47G 19/02, A47G 23/06

(54) **Plate for serving hot meals thereon**

(71) Applicant: Probalco bvba, 8510 Bellegem (BE)
(72) Inventor: Speleers, Pol, 8790 Waregem (BE); Redjal, Karim, 8550 Zwevegem (BE)
(74) Representative: BiiP cvba

(57) **Abstract**

The present invention concerns a plate (1) suited for directly dressing and serving meals directly thereon, which plate (1) comprises a heat storing material (14) allowing keeping the meal dressed thereon warm for an extended period of time in view of regular plates without heat storing material.

## Description

### Field of the Invention

The present invention concerns a plate suited for directly dressing and serving meals directly thereon, which plate comprises a heat storing material allowing keeping the meal dressed thereon warm for an extended period of time in view of regular plates without heat storing material.

### Background to the Invention

When serving hot meals in restaurants, on events, during plane flights and in other situations where the place of dressing a plate is distant from a place of serving the meal it is a challenge to keep the food warm.

WO 90/14783, US 5,125,391, US 4,304,106 for example disclose trays for storing and transporting plates therein. These trays all include a heat storing material such as a phase change material that can store heat rapidly and release the heat more slowly over an elapsed period of time.

A drawback of such trays is that these are not suited for serving food directly thereon but are intended for storing one or more plates with food thereon to enable serving food on these plates at a desired temperature during a relative long period of time. Moreover the use of such trays is generally considered non-appealing for serving food. Another drawback is that with trays as described in at least US'391 and US'106 the heat storing material is provided in a cavity defined by a top and bottom shell of the tray, whereby in case of damaging one of these shells the heat storing material may leak out of the cavity, especially when at a elevated temperature (generally about 60°C) when the heat storing material is in a fluid state. As such temperature is common in for example a dishwasher, dish washing a damaged tray according to US'391 or US'106 can seriously damage a dishwasher due to leakage of the heat storing material (which when temperature drops again can solidify in the tubings).

Yet another disadvantage is that the heat storing material is not restricted in its flow in the cavity when in a liquid state. As a consequence, when slightly tilting a tray the liquid will flow to one side and promote further tilting and hence instability when carrying a pile of trays.

WO 03/079869 discloses a plate for direct contact with food served thereon, comprising a slot in its lower surface for accommodating a cartridge of heat storing material therein.

A drawback of such plate is that the plate and cartridge are two separate items that need to be assembled and disassembled for each use cycle, which is cumbersome and very impractical in restaurants or on large events where dishwashing the plates and reuse of the plates needs to be fast and effective.

Moreover in a plate according to WO'869 the heat storing material is visible at the bottom of the plate and is considered potentially unappealing for people being served.

It is cleat from the above that there remains a need for an appealing, easy to use and handle, safe to use and efficient plate for serving food thereon and for remaining this food warm during an extended period of time in view of food served on normal plates without specific heat storing material.

### Summary of the Invention

The present invention addresses the above identified need by providing a plate for direct contact with food served thereon, said plate comprising: (a) an upper part defining a well of the plate for receiving food and an outer rim extending along at least part of the periphery of the well; (b) a base part fixed to the upper part thereby defining a sealed cavity between the upper and base parts (c) an amount of latent heat storing material disposed in said sealed cavity wherein said heat storing material is provided in a sealed flexible pouch.

Preferably, the heat storing material fills the pouch substantially entirely.

It is preferred that the cavity is situated under at least part of the surface of the well of the plate and under at least part of the outer rim of the plate and that the volume of the cavity V(c) is larger than the volume occupied by the pouch thereby defining a free volume in the cavity, the free volume being situated under the outer rim of the plate.

The volume of the cavity V(c) and the volume of the heat storing material in its expanded phase V(e) are preferably chosen such that the ratio V(e)/V(c) is comprised between 0,6 and 0,9.

The heat storing material preferably is a phase change material (PCM) chosen from the group comprising: hydrated salts, organic compounds, solid to solid PCMs, eutectic solutions and/or admixtures thereof.

The pouch is preferably manufactured in a material comprising polypropylene, polyethylene, polyamide and/or combinations thereof, whereby polyamide 66 is highly preferred.

The plate or at least the upper and or lower part thereof is preferably manufactured in a material selected from the group comprising: ceramic material such as glazed ceramics or porcelain.

According to a preferred embodiment a heat reflective layer is provided between the base part facing the cavity and the pouch.

Further a partitioning wall may be provided in said cavity and defining a compartment wherein the pouch is confined and another compartment substantially corresponding to the free volume.

The plate according to the present invention preferably has a total weight of 1 kg or less, preferably 0,8 kg or less.

The present invention also concerns a method of manufacturing a plate as identified above, said method comprising the steps of: a) providing an upper part and a base part; b) providing a pouch filled with a heat storing material with desired heat absorbing and releasing properties; c) accommodating the pouch on the intended top surface of the base part or the intended lower surface of the upper part and subsequently fixing the upper part and base part to enclose the pouch in a cavity defined both the upper and base part of the plate.

### Brief Description of the Drawings

Figure 1 schematically represents a perspective cut-out view of a plate according to the present invention;
Figure 2 represents a cross-section according to line II-II in figure 1;
Figure 3 represents an alternative embodiment of a plate as depicted in figure 1.

### Detailed Description of a Preferred Embodiment of the Invention

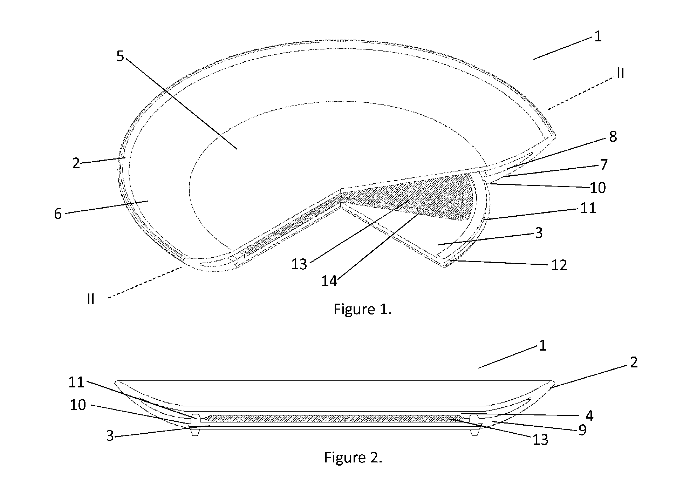

Figure 1 represents a plate 1 according to the present invention comprising an upper part 2 and a base part 3 with a sealed cavity 4 defined in between both part 2 and 3. In this case the upper part 2 comprises a generally planar disc-shaped well 5 and a slanting outer rim 6 extending along the periphery of the well. The outer rim 6 comprises a flange 7 that extends from the outer periphery of the rim towards the base part, thereby defining a void 8 between the outer rim and said flange. At the free end of said flange a rim 9 is provided extending transversally in view of the well and away from said well. In the circular circumference a circular slot 10 is provided.

The base part comprises a rim 11 along its periphery extending into the cavity 4 and defining a circular shoulder portion 12 able to cooperate with the slot circular slot 10 of the upper part for (hermetically) sealing and fixing the base part to the upper part.

The base part 3 and upper part 3 can be fixed by welding (friction welding; laser welding; ultrasonic welding) or by gluing, depending on the material wherein both parts are manufactured.

The upper part and base part can be manufactured from the same material or from different materials chosen from the group comprising: porcelain, plastic, metal or admixtures thereof. Preferably both parts 2 and 3 are manufactured in glazed ceramics such as porcelain, in which case it is preferred to apply glue for fixing the upper part and base part together.

According to the invention a pouch 13 filled, preferably entirely filled without air entrapment, with a heat storing material, most preferably a so-called phase change material 14, is accommodated in said cavity 4.

The pouch 13 is preferably manufactured in a flexible and elastic polymeric material such as polypropylene, polyamide or polyethylene, whereby polyamide 66 is preferred for the reason that it allows good spreading of the PCM material without the sidewalls of the pouch to adhere to one another. The material wherein the pouch is manufactured preferably has a high tear resistance.

The PCM material as per the present invention is defined as a material capable of absorbing, storing, and releasing an amount of energy for a long period of time. The latent heat or cold storage process can be achieved through a phase change, like for example from solid to solid, solid to liquid, solid to gas and liquid to gas, once the material has been subjected to a certain temperature called melting temperature.

Moreover, this process can be repeatedly achieved by reaching the melting temperature of the phase change material. The PCM material 14 may include for example: hydrated salts such as Na2 SO4, 10H2 O; Na2 HPO4, 12H2 O; CaCl2, 6H2 O; [Na2 CO3 ]2, 10H2 O; Mg[NO3 ]2, 6H2 O; MgCl2, 6H2 O; MgSO4, 12 H2 O; sodium acetate trihydrate, glycols such as polyethylene glycol, clathrates, hydroxides, Hydrophobic RT40 Powder, paraffin like octadecane, n-Paraffins, sugar alcohols or fatty acids; paraffin mixed with hydrophobic silica, non-paraffin organic compounds, such as lauric acid, napthalene, magnesium nitrate; acetimide; benzoic acid; strontium bromide; naphthalene; a mixture of urea and benzoic acid, a mixture of benzomide and benzoic acid, aluminum potassium sulfate, ammonium nitrate, fatty acids, esters, silica gel or dry powder, eutectic solutions, ionic liquids or a combination thereof. For assuring different storage and release of heat or cold properties that would be suitable for different types of applications, commercially available PCMs cover a phase change temperature range from - 40 °C to +120 °C, whereby for the present invention PCMs having a phase change temperature between 50°C and 65°C are preferred.

An example of such PCM material is the n-paraffin based Rubitherm ^{®} RT 58 commercialised by RubiTherm ^{®}. This PCM material has a phase change temperature (melting temperature) ranging between 55-59°C (typically 58°C); a heat storage capacity of 178 kJ/kg; a density (solid at 15°C) of 0,88 kg/l; a liquid density (80°C) of 0,77 kg/l; a volume expansion during phase change of 14 %; a heat conductivity of 0,2 W/m*K and a kinetic viscosity (at 90°C) of 32,49 mm2/s.

The pouch, with the PCM in an expanded state occupies a volume V(e) that is lower than the total volume V(c) of the cavity (including the void 8), whereby the ratio V(e)/ V(c) is preferably comprised in the range between 0,6-0,9.

As represented in figure 2, the rim 11 provided on the base part 3 preferably defines a partitioning wall in the cavity, thereby creating a central compartment (below the well 5 of the plate) wherein the pouch is accommodated and a free volume below the outer rim of the plate (substantially corresponding to the void 8).

According to a preferred embodiment, a heat reflective layer 15 or heat insulating layer is provided between the pouch and the base part 3 of the plate 1.

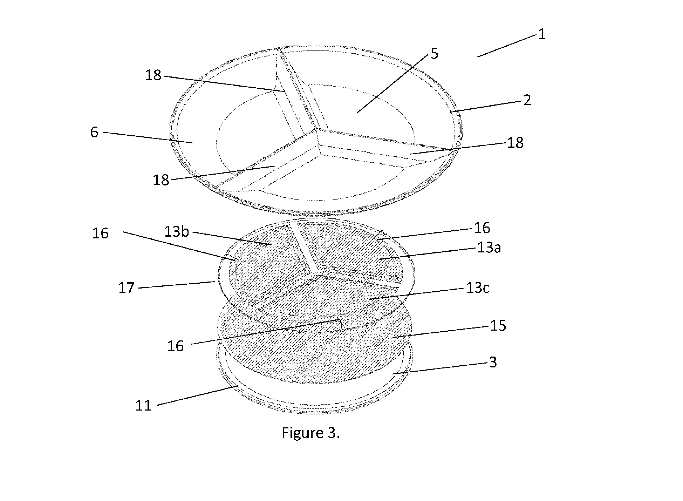

Figure 3 represents an alternative embodiment wherein the cavity is further partitioned in three or more, in this case four, compartments. One compartment under the outer rim of the plate free of PCM material and three compartments under the well each accommodating a pouch with PCM material, whereby one pouch 13a is filled with a PCM material having a phase change temperature T; the second pouch 13b is filled with a PCM having a phase change temperature T2 and the third pouch 13c is filled with a PCM having a phase change temperature T3. In this case T1, T2 and T3 are preferably different and wherein these temperatures can range between 0°C and 120°C, such as to create different zones on the plate that are maintained at different temperatures during a certain period of time sufficient for dressing and serving food on said plate.

In this case the plate preferably comprises an indicator 16, accommodated in for example the outer rim 6 of the plate 1 and connected to temperature sensors 17 designated to each of the PCM comprising compartments of the plate in order to provide a visual or other indication of the temperature in the compartments corresponding to specific sections of the well of the plate.

Furthermore the plate may comprise a number of separating walls 18 on the food receiving surface of the well 5, which walls 18 are arranged corresponding to the specific geometry of the PCM pouches for different temperature zones on the plate.

Manufacturing a plate 1 according to the present invention comprises the steps of: a) providing the upper part and the base part; b) providing a pouch filled with a PCM material with a desired phase change temperature; c) accommodating the pouch on the intended top surface of the base part or the intended lower surface of the upper part and subsequently fixing the upper and base parts to enclose the pouch in the cavity defined both the upper and base part of the plate.

In use, the plate and specifically the PCM material accommodated therein is heated to a desired temperature at or above its phase change temperature and subsequently food can be dressed directly on the upper part 2 of the plate 1, preferably in the well 5.

As the PCM material will release the heat stored therein over an extended period of time (generally up to 30 and even 60 minutes) the food dressed and served on the plate will remain warm during that extended period of time.

When serving the plate, a waiter can easily hold the plate at its outer rim as in this part no PCM material is present and as this part is filled with a layer of air that acts as an insulator. In alternative embodiments the free space in the cavity situated under the outer rim of the plate can be filled or partially filled with other insulating materials such as a heat insulating foam.

By providing the PCM material directly under the surface of the plate contacting the food dressed and served thereon the total amount of PCM material can be limited to for example between 60-390cm3, preferably between 60-260cm3, more preferably between 60-130cm3 and most preferably between 90-130cm3, thereby enabling limiting the total weight of the plate (upper part + lower part + pouch + PCM material) to below 2 kg, preferably below 1 kg even when both the upper plate and base plate are manufactured in porcelain.

## Claims

1. A plate for direct contact with food served thereon, said plate comprising: (a) an upper part defining a well of the plate for receiving food and an outer rim extending along at least part of the periphery of the well; (b) a base part fixed to the upper part thereby defining a sealed cavity between the upper and base parts (c) an amount of latent heat storing material disposed in said sealed cavity **characterized in that** said heat storing material is provided in a sealed flexible pouch.

2. The plate according to claim 1, wherein said cavity is situated under at least part of the surface of the well of the plate and under at least part of the outer rim of the plate.

3. The plate according to claim 2, wherein the volume of the cavity V(c) is larger than the volume occupied by the pouch thereby defining a free volume in the cavity, the free volume being situated under the outer rim of the plate.

4. The plate according to any of the preceding claims, wherein said heat storing material is a phase change material having an expanded state wherein the amount of PCM occupies a volume V(e) and a non-expanded state wherein the amount of PCM occupies a volume V(ne).

5. The plate according to claim 4, wherein the ration V(e) / V(c) is comprised between 0,6 and 0,9.

6. The plate according to any of the claims 4-5, wherein the PCM material is selected from the group comprising: hydrated salts, organic compounds, solid to solid PCMs, eutectic solutions and/or admixtures thereof.

7. The plate according to claim 1, wherein the upper part and or base part are made of a ceramic material such as glazed ceramics or porcelain.

8. The plate according to claim 7, having a total weight of 1 kg or less, preferably 0,8 kg or less.

9. The plate according to any of the preceding claims, wherein the pouch is manufactured from a composition comprising polypropylene, polyethylene, polyamide and/or combinations thereof.

10. The plate according to claim 9, wherein the pouch is manufactured from a composition comprising polyamide 66.

11. The plate according to any of the preceding claims, wherein a heat reflective layer is provided between the base part facing the cavity and the pouch.

12. The plate according to any of the preceding claims comprising a partitioning wall provided in said cavity and defining a compartment wherein the pouch is confined and another compartment substantially corresponding to the free volume.

13. A method of manufacturing a plate as identified in any of claims 1-12, said method comprising the steps of: a) providing an upper part and a base part; b) providing a pouch filled with a heat storing material with desired heat absorbing and releasing properties; c) accommodating the pouch on the intended top surface of the base part or the intended lower surface of the upper part and subsequently fixing the upper part and base part to enclose the pouch in a cavity defined both the upper and base part of the plate.
